# EUROPÄISCHE PATENTANMELDUNG

(11) **EP 2 388 880 A1**
(43) Veröffentlichungstag der Anmeldung: **23.11.2011**
(21) Anmeldenummer: 10163567.0
(22) Anmeldetag: 21.05.2010
(51) Int. Cl.: H02H 9/04

(54) **Schaltungsanordnung zur Spannungsbegrenzung und Anschlussvorrichtung**

(71) Anmelder: Siemens Aktiengesellschaft, 80333 München (DE)
(72) Erfinder: Reinelt, Klaus, 90766, Fürth (DE); Volkmann, Hans, 90559, Burgthann (DE)

(57) **Zusammenfassung**

Schaltungsanordnung zur Spannungsbegrenzung und Anschlussvorrichtung

Die Erfindung betrifft eine Schaltungsanordnung (1) zur Spannungsbegrenzung in einer Zuleitung (30) zu einem Stromverbraucher (31), mit
- einem ersten Längszweig (2), der einen ersten Eingangspunkt (4) mit einem ersten Ausgangspunkt (5) verbindet,
- mit einem zweiten Längszweig (3), der einen zweiten Eingangspunkt (6) mit einem zweiten Ausgangspunkt (7) verbindet,
- mit einem Schaltmittel (10) zum Schalten eines Strompfades zwischen den Eingangspunkten (4,6), wobei das Schaltmittel (10) einen Steuereingang (11) aufweist,
- welcher mit einem Überwachungsmittel (12) in Verbindung steht,
- mit einem Begrenzungsmittel (13) zum Begrenzen einer Ausgangsspannung

wobei das Begrenzungsmittel (13) mit dem Überwachungsmittel (12) derart gekoppelt ist, das eine Zustandsänderung des Begrenzungsmittels (13) erkennbar ist, wobei das Überwachungsmittel (12) weiterhin dazu ausgestaltet ist bei Überschreiten eines Grenzwertes das Schaltmittel (10) über den Steuereingang (11) zu schalten.

## Beschreibung

Schaltungsanordnung zur Spannungsbegrenzung und Anschlussvorrichtung

Die Erfindung betrifft eine Schaltungsanordnung zur Spannungsbegrenzung in einer Zuleitung zu einem Stromverbraucher, mit einem ersten Längszweig, der einen ersten Eingangspunkt mit einem ersten Ausgangspunkt verbindet, mit einem zweiten Längszweig, der einen zweiten Eingangspunkt mit einem zweiten Ausgangspunkt verbindet, mit einem Schaltmittel zum Schalten eines Strompfades zwischen den Eingangspunkten, wobei das Schaltmittel einen Steuereingang aufweist, welcher mit einem Überwachungsmittel in Verbindung steht, mit einem Begrenzungsmittel zum Begrenzen einer Ausgangsspannung.

Des Weiteren betrifft die Erfindung eine Anschlussvorrichtung gemäß den Merkmalen des Patentanspruchs 7.

Insbesondere bei einem Einsatz von elektrischen Geräten, Schaltungsanordnungen oder Anschlussvorrichtungen, in explosionsgefährdeten Zonen müssen Sicherheitsmaßnahmen ergriffen werden, welche dazu ausgelegt sind, dass Verbraucher einen maximalen Strom und eine maximale Spannung nicht überschreiten können. Nach den Vorschriften des Explosionsschutzes spricht man von einer eigensicheren Energiequelle dann, wenn die Spannung, welche die Energiequelle zur Verfügung stellt und der Strom, den der Verbraucher maximal einer Energiequelle entnehmen kann, auf einen bestimmten Grenzwert beschränkt sind.

Derartige Schutzschaltungen, Schaltungsanordnungen oder Leistungsbegrenzungsschaltungen zur Spannungsbegrenzung in einer Zuleitung zu einem Stromverbraucher sind aus der Offenlegungsschrift DE 101 24 683 A1 bekannt. Bei dem Stand der Technik wird im Wesentlichen eine Parallelschaltung von einer Zenerdiode und einem Thyristor eingesetzt. Bei der aus der DE 101 24 683 A1 bekannten Schaltungsanordnung ist es von Nachteil, dass zum Ermitteln eines unzulässig hohen Stromes ein Stromsensorwiderstand als ein Längswiderstand in einem ersten Längszweig eingesetzt wird. Ein Spannungsabfall an dem Stromsensorwiderstand wird dann als Eingangsgröße für ein Überwachungsmittel, welches als eine Strommessschaltung ausgestaltet ist, eingesetzt. Dieses Überwachungsmittel weist wiederum einen Signalausgang auf, welcher einen Thyristor zündet, wodurch ein ungehinderter Stromfluss zwischen dem ersten Längszweig und dem zweiten Längszweig möglich ist, und wobei durch den Stromfluss eine Schmelzsicherung durchbrennt. Bei der genannten Schaltung ist es von Nachteil, dass ein Erkennen einer Überspannung ein sofortiges Zünden des Thyristors und damit ein Durchbrennen der Schmelzsicherung zur Folge hat. Die nach dem Stand der Technik bekannte Strommesseinrichtung ist nicht genau genug und weist zudem einen erhöhten Schaltungsaufwand auf.

Es ist daher die Aufgabe der Erfindung, die nach dem Stand der Technik bekannte Schaltungsanordnung derart weiterzubilden, dass zu hohe Spannungswerte schnell und sicher auf einen bestimmten Wert begrenzt werden, wobei, beispielsweise durch Abklemmen eines Stromverbrauchers hervorgerufene Spannungsspitzen, nicht unmittelbar derart auf eine kurzzeitig erhöhte Spannung reagiert wird, so dass als Folge auf die Spannungsbegrenzung die Schmelzsicherung durchbrennt.

Die Aufgabe wird durch eine Schaltungsanordnung mit den Merkmalen des Oberbegriffes des Patentanspruchs 1 dadurch gelöst, dass das Begrenzungsmittel mit dem Überwachungsmittel derart gekoppelt ist, dass eine Zustandsänderung des Begrenzungsmittels erkennbar ist, wobei das Überwachungsmittel weiterhin dazu ausgestaltet ist, bei Überschreiten eines Grenzwertes das Schaltmittel über den Steuereingang zu schalten. Bei einer derartigen Ausgestaltung der Schaltungsanordnung ist es vorteilhaft, dass das Begrenzungsmittel aufgrund einer zu hohen Spannung die Spannung begrenzt und dabei nicht sofort das Schaltmittel auslöst, denn das Auslösen des Schaltmittels kommt einer Sicherheitsabschaltung gleich, wobei zwischen dem ersten Eingangspunkt und dem zweiten Eingangspunkt ein derartig hoher Strom fließt, dass die Schmelzsicherung durchbrennt.

In einer vorteilhaften alternativen Weiterbildung der Schaltungsanordnung ist dieses derart ausgestaltet, dass die Zustandsänderung eine Temperaturänderung des Begrenzungsmittels ist und das Überwachungsmittel zum Auswerten eines Temperaturanstieges ausgestaltet ist. Durch das Begrenzungsmittel wird eine möglicherweise auftretende Überspannung auf einen sicheren Wert begrenzt. Durch diese Begrenzung tritt in dem Begrenzungsmittel eine erhöhte Verlustleistung auf, welche sich durch eine Wärmeentwicklung an dem Begrenzungsmittel äußert. Diese Wärmeentwicklung bzw. ein Temperaturanstieg kann gemessen und ausgewertet werden. D.h. kurzzeitige Spannungsspitzen können durch das Begrenzungsmittel sicher begrenzt werden, ohne dass das Begrenzungsmittel eine wesentliche Temperaturerhöhung erfährt. Erst wenn die Spannungsbegrenzung durch das Begrenzungsmittel eine gewisse Zeitdauer anhält steigt auch die Eigenerwärmung des Begrenzungsmittels und somit ist ein Temperaturanstieg auswertbar, welcher dazu führt, dass das Überwachungsmittel das Schaltmittel erst betätigt wenn ein bestimmter Temperaturgrenzwert überschritten wird.

Bei einer weiteren alternativen Ausgestaltung ist es vorteilhaft, wenn die Zustandsänderung ein Einsetzen der Spannungsbegrenzung durch das Begrenzungsmittel (13) ist und das Überwachungsmittel (12) einen Zeitzähler aufweist, welcher mit dem Einsetzen der Spannungsbegrenzung gestartet wird und der nach Ablauf einer definierten Zeit das Durchschalten des Schaltmittels (10) auslöst. Wiederum könnte eine kurzzeitige Spannungsspitze dazu führen, dass das Begrenzungsmittel eine Spannungsbegrenzung ausführt. Da aber wiederum nicht sofort nach einer Spannungsbegrenzung das Schaltmittel ausgelöst werden soll, ist es vorteilhaft, dass ein Zeitzähler gestartet wird und erst nach Ablauf einer vorgegebenen Zeit, wobei das Begrenzungsmittel immer noch im Status Spannungsbegrenzung sein muss, über das Überwachungsmittel das Schaltmittel ausgelöst wird.

Vorzugsweise ist das Begrenzungsmittel als eine Zenerdiode ausgestaltet, welche zwischen dem ersten Ausgangspunkt und dem zweiten Ausgangspunkt angeordnet ist. Die Spannungsbegrenzung auf eine Konstantspannung kann mit Hilfe der Z-Diode oder einer vergleichbaren Schaltung zwischen den beiden Längszweigen erreicht werden.

Vorzugsweise ist das Schaltmittel als ein schaltbarer Leistungshalbleiter, insbesondere als ein Thyristor, ausgestaltet. Um eine Verlustleistung in der Z-Diode zu begrenzen, wird nun entweder in einem ersten Fall eine thermische Überwachung der Z-Diode, beispielsweise mittels eines PTC-Widerstandes, mit Hilfe des Überwachungsmittels ausgeführt oder in einem zweiten Fall ein zeitlich verzögertes Schaltsignal für das Schaltmittel generiert. Dieses Schaltsignal kann aus einem Einsatzzeitpunkt der Begrenzungsschaltung abgeleitet werden. Beide Möglichkeiten dienen dazu, den parallel geschalteten Thyristor zu zünden und damit die Verlustleistung zu verringern und gegebenenfalls die Schmelzsicherung auszulösen.

Die Sicherung ist dabei vorteilhafter Weise in einer Reihenschaltung mit dem Schaltmittel angeordnet, wobei die Sicherung in einem der Längszweige angeordnet ist.

Insbesondere bei einem Einsatz von Schaltungsanordnungen innerhalb einer explosionsgefährdeten Zone, wird die eingangs genannte Aufgabe auch durch eine Anschlussvorrichtung gemäß den Merkmalen des Patentanspruchs 7 gelöst.

Bei Anschlussvorrichtungen für Feldgeräte, welche über einen Bus, insbesondere einen Feldbus, beispielsweise mit einem übergeordneten Automatisierungsgerät kommunizieren, bildet das Buskabel eine für alle Feldgeräte gemeinsame Komponente, welches auch zur Stromversorgung der Feldgeräte bzw. der daran angeschlossenen elektrischen Verbraucher genutzt wird. Um die Explosionsschutzvorschriften für den Einsatz von Anschlussvorrichtungen für Feldgeräte in explosionsgefährdeten Zonen zu erfüllen, weisen derartige Anschlussvorrichtungen die bereits genannte Schaltungsanordnung zur Spannungs- und Strombegrenzung in einer Zuleitung zu dem Feldgerät auf. Bei einer Erweiterung eines Feldbusses mit Feldgeräten, beispielsweise eines PA-/FF-Busses, kann es passieren, dass durch An- oder Abklemmen von Feldgeräten kurzzeitige Spannungsspitzen auftreten. Da durch diese kurzzeitig auftretenden Spannungsspitzen nicht direkt eine Schutzsicherung, nämlich die Schmelzsicherung, in der Anschlussvorrichtung ausgelöst werden soll, sind die Anschlussvorrichtungen vorteilhafter Weise mit einer Schaltungsanordnung gemäß den Ansprüchen 1 bis 6 ausgestattet.

Die Zeichnung zeigt zwei Ausführungsbeispiele und weitere Merkmale der Erfindung. Es zeigen:
- FIG 1: eine Schaltungsanordnung mit thermischer Überwachung,
- FIG 2: eine Schaltungsanordnung mit einer zeitlich verzögerten Überwachung und
- FIG 3: eine Anschlussvorrichtung an einem Feldbus.

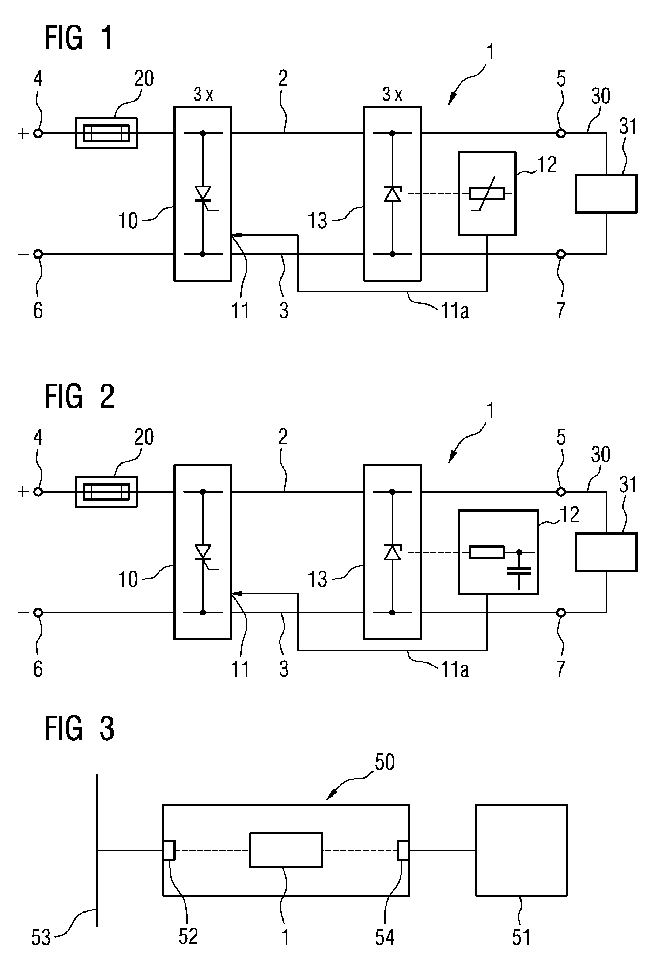

Gemäß der FIG 1 ist, in einer ersten Ausgestaltungsvariante, eine Schaltungsanordnung 1 zur Spannungsbegrenzung in einer Zuleitung 30 zu einem Stromverbraucher 31 dargestellt. Ein erster Längszweig 2, verbindet einen ersten Eingangspunkt 4 mit einem ersten Ausgangspunkt 5. Ein zweiter Längszweig 3 verbindet einen zweiten Eingangspunkt 6 mit einem zweiten Ausgangspunkt 7. An den Eingangspunkten 4,6 wird, wie durch +/- angedeutet, eine Gleichspannung bzw. ein Gleichstrom für den Stromverbraucher 31 eingespeist. An den Ausgangspunkten 5,7 ist über die Zuleitung 30 der Stromverbraucher 31 angeschlossen, welcher somit den bereitgestellten Strom nutzen kann, wobei die Spannung durch die Schaltungsanordnung 1 auf unzulässige Spannungswerte begrenzt werden kann.

Ein Schaltmittel 10 zum Schalten eines Strompfades zwischen dem ersten Eingangspunkt 4 und dem zweiten Eingangspunkt 6 ist zwischen den Eingangspunkten 4,6 angeordnet. Zwischen dem ersten Ausgangspunkt 5 und dem zweiten Ausgangspunkt 7 ist ein Begrenzungsmittel 13 zum Begrenzen einer Ausgangsspannung angeordnet. Das Begrenzungsmittel 13 ist mit einem Überwachungsmittel 12 derart gekoppelt, dass eine Zustandsänderung des Begrenzungsmittels 13 erkennbar ist, wobei das Überwachungsmittel 12 weiterhin dazu ausgestaltet ist, bei Überschreiten eines Grenzwertes das Schaltmittel 10 über einen Steuereingang 11 zu schalten. Das Überwachungsmittel 12 ist über eine Steuerleitung 11a mit dem Schaltmittel 10 verbunden. Das Überwachungsmittel 12 ist als eine thermische Überwachung ausgestaltet und mit dem Begrenzungsmittel 13 derart thermisch gekoppelt, dass ein Temperaturanstieg im Begrenzungsmittel 13 durch das Überwachungsmittel 12 unmittelbar erkennbar ist. Ist das Begrenzungsmittel 13 als eine Z-Diode ausgestaltet, so weist das Überwachungsmittel 12 einen PTC-Widerstand auf, diese beiden Bauteile sind in direkter thermischer Kopplung miteinander angeordnet.

Hat also das Begrenzungsmittel 13 aufgrund einer Überspannung zwischen den Ausgangspunkten 5,7 mit seiner Tätigkeit der Spannungsbegrenzung begonnen, so entsteht allmählich ansteigend, aufgrund der Verlustleistung, eine Wärmeentwicklung. Übersteigt diese Wärmeentwicklung einen Grenzwert, so kann daraus geschlossen werden, dass eine Überspannung länger anliegt als es für eine kurzzeitig auftretende Spannungsspitze zulässig wäre, und somit kann zur Vermeidung von Gefahren das Schaltmittel 10 ausgelöst werden. Das Schaltmittel 10 weist einen Thyristor auf, welcher über den Steuereingang 11 gezündet wird. Das Zünden des Thyristors hat zur Folge, dass ein niederohmiger Strompfad zwischen dem ersten Eingangspunkt 4 und dem zweiten Eingangspunkt 6 gebildet wird. Dieser niederohmiger Strompfad dient somit der Sicherheitsabschaltung, da nun zwischen dem ersten Eingangspunkt 4 und dem zweiten Eingangspunkt 6 ein erhöhter Strom fließen kann, welcher dazu führt, dass die Sicherung 20 ausgelöst wird. Die Sicherung 20 ist in diesem Fall eine Schmelzsicherung, welche danach dauerhaft den Stromfluss trennt.

Mit der aufgezeigten Schaltungsanordnung erreicht man gegenüber dem genannten Stand der Technik zwei wesentliche Vorteile. Bei betriebsbedingt auftretenden Überspannungen kann nach wie vor sicher und schnell durch die Z-Diode die Überspannung begrenzt werden. Der Thyristor wird jedoch nicht sofort gezündet, denn ein Zünden des Thyristors hat zwangsläufig ein Auslösen der Schmelzsicherung zur Folge und dies würde einen Defekt des Gerätes bedeuten. Diesen Defekt müsste ein Monteur erst durch Öffnen des Gerätes beseitigen.

Angenommen, die Einspeisung einer Gleichspannung an den Eingangspunkten 4,6 würde aufgrund eines DC/DC-Wandlers erfolgen und dieser DC/DC-Wandler hätte beispielsweise einen Defekt, und dadurch würde dauerhaft eine fehlerhafte Überspannung anliegen. Aufgrund der dauerhaft anliegenden Überspannung kommt es zu einem thermisch bedingten Zünden des Thyristors und damit zu einem sicheren Zustand im Sinne des Explosionsschutzes. Ein weiterer Vorteil besteht darin, dass keine Spannungsdifferenz definiert werden muss, welche zwischen der Begrenzungsspannung der Z-Diode einerseits und der Thyristor-Auslösespannung andererseits liegt. Bei Schaltungsanordnungen nach dem Stand der Technik erfordern die darin offenbarten Lösungen eine Spannungsdifferenz zwischen der Z-Diode und der Thyristor-Auslösespannung, die beispielsweise bei einem Anwendungsfall, wie einem Automatic Field Distributor - intrinsically Safe-Feldverteiler, dazu führen würde, dass eine nominale Ausgangsspannung niedriger sein würde, als eine sicherheitstechnisch maximal zulässige Ausgangsspannung, welches wiederum zu einer Beschränkung einer maximalen Leitungslänge bei einem Einsatz von beispielsweise PROFIBUS PA-Feldgeräten führen würde.

Eine Kennzeichnung 3X über dem Schaltmittel 10 und dem Begrenzungsmittel 13 soll die dreifache Ausführung dieser Schaltmittel bzw. Begrenzungsmittel symbolisieren. Diese dreifache Ausführung ist zur Erfüllung einer Sicherheitsnorm notwendig.

Gemäß FIG 2 ist die aus FIG 1 bekannte Schaltungsanordnung 1 mit einem zeitlich gesteuerten Überwachungsmittel 12 ausgestaltet. Die Funktionsweise der Schaltungsanordnung 1 aus FIG 2 ist mit der Funktionsweise der Schaltungsanordnung 1 aus FIG 1 identisch, jedoch ist nun das Überwachungsmittel 12 als eine zeitverzögerte Überwachung ausgestaltet. Das bedeutet, das Überwachungsmittel 12 überwacht das Begrenzungsmittel 13 auf eine Spannungsänderung. Tritt eine Spannungsänderung ein, so wird in dem Überwachungsmittel 12 ein Zeitzähler gestartet, welcher den Beginn einer einsetzenden Spannungsbegrenzung dokumentiert. Dieser Zeitzähler kann beispielsweise bis zu einer Zeit von 50 ms hochzählen und erst dann ein Schaltsignal über die Steuerleitung 11a an den Steuereingang 11 des Schaltmittels 10 anlegen. Durch das angelegte Schaltsignal wird, wie bereits in FIG 1 beschrieben, das Schaltmittel 10 ausgelöst bzw. der Thyristor gezündet.

Gemäß der FIG 3 ist eine Anschlussvorrichtung 50 zum Anschluss eines Feldgerätes 51 dargestellt. Die Anschlussvorrichtung 50 weist dazu einen Busanschluss 52 und einen Feldgeräteanschluss 54 auf. Ein Bus 53 ist mit dem Busanschluss 52 verbunden. Der Bus 53 ist beispielsweise als ein PROFIBUS PA ausgestaltet und führt neben Datensignalen auch eine Versorgungsspannung für über die Anschlussvorrichtung 50 angeschlossene Feldgeräte 51. Werden diese Anschlussvorrichtungen 50 und die Feldgeräte 51 in einer explosionsgefährdeten Umgebung eingesetzt, so müssen sie Sicherheitsanforderungen erfüllen, wie z.B. eine Spannungsbegrenzung. Dazu ist in der Anschlussvorrichtung 50 die in der FIG 1 oder FIG 2 beschriebene Schaltungsanordnung 1 angeordnet. Die Schaltungsanordnung 1 liegt mit ihren Längszweigen 2,3 in der Strom-/Spannungsversorgung für das Feldgerät 51 zwischen dem Bus 53 und dem Feldgerät 51.

## Patentansprüche

1. Schaltungsanordnung (1) zur Spannungsbegrenzung in einer Zuleitung (30) zu einem Stromverbraucher (31), mit
- einem ersten Längszweig (2), der einen ersten Eingangspunkt (4) mit einem ersten Ausgangspunkt (5) verbindet,
- mit einem zweiten Längszweig (3), der einen zweiten Eingangspunkt (6) mit einem zweiten Ausgangspunkt (7) verbindet,
- mit einem Schaltmittel (10) zum Schalten eines Strompfades zwischen den Eingangspunkten (4,6), wobei das Schaltmittel (10) einen Steuereingang (11) aufweist,
- welcher mit einem Überwachungsmittel (12) in Verbindung steht,
- mit einem Begrenzungsmittel (13) zum Begrenzen einer Ausgangsspannung
**dadurch gekennzeichnet, dass** das Begrenzungsmittel (13) mit dem Überwachungsmittel (12) derart gekoppelt ist, das eine Zustandsänderung des Begrenzungsmittels (13) erkennbar ist, wobei das Überwachungsmittel (12) weiterhin dazu ausgestaltet ist bei Überschreiten eines Grenzwertes das Schaltmittel (10) über den Steuereingang (11) zu schalten.

2. Schaltungsanordnung (1) nach Anspruch 1, wobei die Zustandsänderung eine Temperaturänderung des Begrenzungsmittels (13) ist und das Überwachungsmittel (12) zum Auswerten eines Temperaturanstiegs ausgestaltet ist.

3. Schaltungsanordnung (1) nach Anspruch 1, wobei die Zustandsänderung ein Einsetzen der Spannungsbegrenzung durch das Begrenzungsmittel (13) ist und das Überwachungsmittel (12) einen Zeitzähler aufweist, welcher mit dem Einsetzen der Spannungsbegrenzung gestartet wird und der nach Ablauf einer definierten Zeit das Durchschalten des Schaltmittels (10) auslöst.

4. Schaltungsanordnung (1) nach einem der Ansprüche 1 bis 3, wobei das Begrenzungsmittel (13) als eine Zener-Diode ausgestaltet ist und zwischen dem ersten Ausgangspunkt (5) und dem zweiten Ausgangspunkt (7) angeordnet ist.

5. Schaltungsanordnung (1) nach einem der Ansprüche 1 bis 4, wobei das Schaltmittel (10) als ein schaltbarer Leistungshalbleiter, insbesondere als ein Thyristor, ausgestaltet ist.

6. Schaltungsanordnung (1) nach einem der Ansprüche 1 bis 5, wobei eine Sicherung (20) mit dem Schaltmittel (10) in einer Reihenschaltung und in einem der Längszweige (2,3)angeordnet ist.

7. Anschlussvorrichtung (50) zum Anschluss von Feldgeräten (51), umfassend
- einen Busanschluss (52) zum Anschluss an einen Bus (53),
- einen Feldgeräteanschluss (54) zum Anschluss für ein Feldgerät (51),
mit einer Schaltungsanordnung (1) zur Spannungsbegrenzung in einer Zuleitung zu dem Feldgerät (14), mit
- einem ersten Längszweig (2), der einen ersten Eingangspunkt (4) mit einem ersten Ausgangspunkt (5) verbindet,
- mit einem zweiten Längszweig (2), der einen zweiten Eingangspunkt (6) mit einem zweiten Ausgangspunkt (7) verbindet,
- mit einem Schaltmittel (10) zum Schalten eines Strompfades zwischen den Eingangspunkten (4,5), wobei das Schaltmittel (10) einen Steuereingang (11) aufweist,
- welcher mit einem Überwachungsmittel (12) in Verbindung steht,
- mit einem Begrenzungsmittel (13) zum Begrenzen einer Ausgangsspannung
**dadurch gekennzeichnet, dass** das Begrenzungsmittel (13) mit dem Überwachungsmittel (12) derart gekoppelt ist, das eine Zustandsänderung des Begrenzungsmittels (13) erkennbar ist, wobei das Überwachungsmittel (12) weiterhin dazu ausgestaltet ist bei Überschreiten eines Grenzwertes das Schaltmittel (10) über den Steuereingang (11) zu schalten.
